Europäisches Patentamt

European Patent Office

Office européen des brevets

(11) Numéro de publication: **0 643 516 A1**

## DEMANDE DE BREVET EUROPEEN

(21) Numéro de dépôt: **94202566.9**

(22) Date de dépôt: **07.09.94**

(51) Int. Cl.6: **H04L 25/08**

(30) Priorité: **13.09.93 FR 9310868**

(43) Date de publication de la demande:
**15.03.95 Bulletin 95/11**

(84) Etats contractants désignés:
**DE FR GB IE IT SE**

(71) Demandeur: **T.R.T. TELECOMMUNICATIONS
RADIOELECTRIOUES ET TELEPHONIOUES
88, rue Brillat Savarin
F-75013 Paris (FR)**

(84) **FR**

(71) Demandeur: **PHILIPS ELECTRONICS N.V.
Groenewoudseweg 1**

**NL-5621 BA Eindhoven (NL)**

(84) **DE GB IE IT SE**

(72) Inventeur: **Botto, Jean-Luc, Soc. S.P.I.D.
156 Boulevard Haussmann
F-75008 Paris (FR)**
Inventeur: **Hachem, Walid, Soc. S.P.I.D.
156 Boulevard Haussmann
F-75008 Paris (FR)**

(74) Mandataire: **Chaffraix, Jean
Société Civile S.P.I.D.
156, Boulevard Haussmann
F-75008 Paris (FR)**

(54) **Dispositif de détection de rupture de ligne.**

(57) Ce dispositif de détection de rupture de ligne de transmission faisant partie du modem comporte un accès (45) pour émettre des données, un accès (46) pour recevoir des données d'un équipement lontain, un mesureur (80) d'une grandeur représentant la corrélation des données émises avec des données reçues et un dispositif à seuil (81) pour déclencher une alarme de rupture de ligne lorsque cette grandeur excède une valeur de seuil L, ladite corrélation portant sur une gamme limitée d'échantillons.
Application : transmission de données.

FIG. 2

**EP 0 643 516 A1**

La présente invention concerne un système de transmission comprenant un modem conecté à un modem distant par une ligne de transmission, au moins un des modems comportant un dispositif de détection de rupture de ligne, avec un mesureur d'une grandeur représentant la corrélation des données émises avec des données reçues et un dispositif à seuil pour déclencher une alarme de rupture de ligne lorsque cette grandeur excède une valeur de seuil L.

Ce genre de dispositif est connu et on pourra consulter à ce sujet la demande de brevet du JAPON 4-150525 déposée le 12 octobre 1990. Ce genre de dispositif est appelé à coopérer avec des modems munis d'au moins un annuleur d'écho. Ce genre de dispositif a pour but de résoudre le problème de la rupture de la ligne reliant un modem proche avec un modem distant. Les annuleurs d'écho, en cas de rupture de la ligne, bien que se trouvant brusquement désadaptés, peuvent reconverger très vite sur cette nouvelle situation et cela risque de ne donner aucune alarme sur un laps de temps assez long, par exemple, de quelques minutes. Ce temps perdu est préjudiciable à l'utilisateur qui paye l'occupation d'une ligne qui en fait ne transmet plus d'informations. En outre, si des problèmes d'urgence sont liés à cette liaison, c'est aussi du temps perdu pour trouver une autre ligne de transmission.

Dans le dispositif connu, on utilise pleinement les annuleurs d'écho associés, ce qui implique beaucoup de calculs.

L'invention propose un dispositif du genre ci-dessus qui fournit une alarme dans un laps de temps réduit de l'ordre de 10 secondes après une interruption de ligne sans nécessiter beaucoup de calculs.

Pour cela, un tel dispositif est remarquable en ce que la corrélation porte sur une gamme limitée d'échantillons correspondant au temps d'écho.

La description suivante accompagnée des dessins ci-annexés, le tout donné à titre d'exemple non limitatif fera bien comprendre comment l'invention peut être réalisée.

La figure 1 montre la structure du modem comportant un dispositif de détection de rupture de ligne conforme à l'invention.

La figure 2 montre un bloc fonctionnel destiné à faciliter l'explication du fonctionnement du dispositif de détection conforme à l'invention.

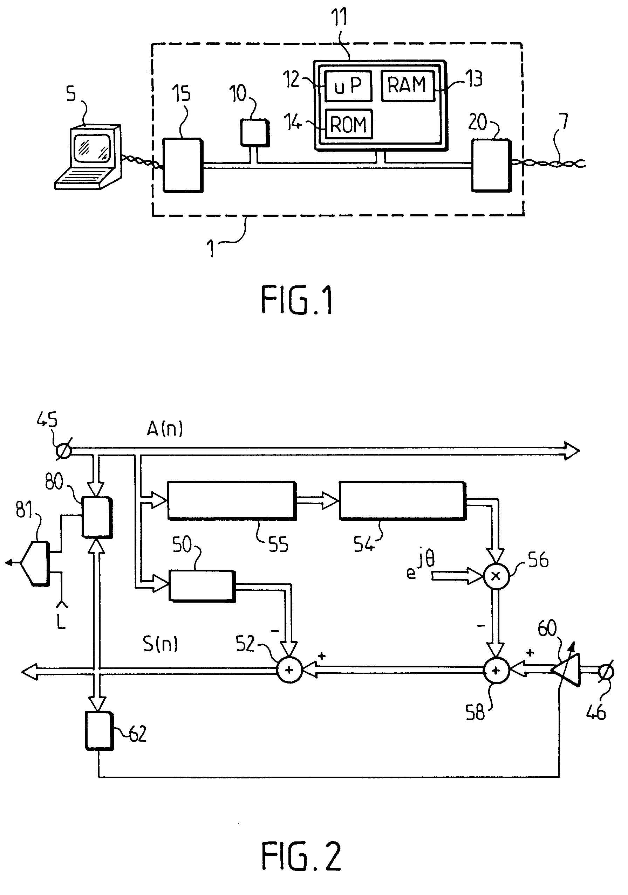

Le modem sur la figure 1 porte la référence 1, il interconnecte un terminal de type numérique 5 à une ligne de transmission du genre ligne téléphonique 7.

Ce modem est constitué à partir d'ensembles à microprocesseur 10 et 11. L'ensemble 10 est affecté à la gestion du modem et l'ensemble 11 comporte, de la manière habituelle, un microprocesseur 12, une mémoire vive de travail 13 et une mémoire morte 14 contenant les instructions qui permettent la mise en oeuvre de l'invention. Un premier circuit d'interface 15 permet la liaison entre le modem 1 et le terminal 5. Un second circuit d'interface 20 permet de transformer d'une part les signaux en provenance de la ligne téléphonique 7 en signaux numériques et d'autre part de faire l'opération contraire. Un tel circuit est décrit dans le brevet européen EP 0 318 105.

L'ensemble 11 effectue différentes fonctions et notamment celle d'annulation d'écho. Cette fonction est illustrée sous forme de blocs fonctionnels à la figure 2.

Sur cette figure la référence 45 représente l'accès des données A(n) qui sont destinées à être émises et 46 l'accès sur lequel les données sont reçues. La référence 50 représente un filtre transversal qui multiplie par des constantes évolutives différents échantillons des données transmises A(n) décalées dans le temps. Ce filtre 50 a pour but de simuler un écho proche de sorte qu'un organe de soustraction 52 permet d'enlever les signaux néfastes dus à l'écho proche grâce à la contribution du filtre 50. On obtient ainsi un signal utile S(n).

La référence 54 représente un autre filtre transversal qui multiplie par des constantes évolutives différents échantillons des données transmises A(n) décalées dans le temps. Ce filtre 54 a pour but de simuler un écho lointain. Comme ces échos lointains sont soumis à une certaine dérive en fréquence, un organe de déphasage rattrape cette dérive. Il est représenté sur la figure 2 sous la forme d'un organe de multiplication 56 qui multiplie les signaux de sortie du filtre 54 par $e^{j\theta}$. Un organe 55 amenant un retard pur 55 permet de faire travailler dans de bonnes conditions le filtre 54. On constitue ainsi une réplique d'un écho lointain de sorte qu'un organe de soustraction 58 permet d'enlever les signaux néfastes dus à cet écho lointain.

En outre, un amplificateur de commande automatique de gain 60 permet, au moyen d'un organe de commande 62, que le niveau des données reçues reste constant.

Lorsqu'il y a rupture de la ligne les algorithmes, qui donnent les valeurs du déphasage $\theta$ et les coefficients des filtres 50 et 54, sont robustes et s'adaptent à ces nouvelles conditions. L'alarme est déclenchée au bout d'un temps trop long.

Pour éviter ce temps trop long, l'invention propose d'utiliser un dispositif de détection de rupture de ligne formé d'un mesureur de corrélation 80 entre les données A(n) et S(n) et d'un circuit à seuil 81.

2

L'invention repose sur les considérations suivantes. Afin de simplifier les explications, on s'intéresse, tout d'abord, à l'écho proche.

Les différents échantillons dont il va être question, sont complexes et suréchantillonnés par rapport à la période baud T de sorte qu'un échantillon noté X(n) doit être compris comme :

$$X^r(n) \; = \; X[(n+\frac{r}{R}).T] \quad r \; = \; 0,...R-1$$

Pour détecter la rupture de ligne, on examine la corrélation des symboles émis A(n) avec les symboles reçus S(n). Pour cela, on évalue la quantité suivante :

$$I \; = \; \sum_{i=0}^{\infty} \left| E[A(n).\overline{S}^r(n+i)] \right|^2 \qquad\qquad (1)$$

où $\overline{S}^r(n+i)$ est la valeur conjuguée de $S^r(n+i)$ et où E[...] est l'espérance mathématique de la valeur entre les crochets.

Si l'on reçoit des données d'un modem distant, les valeurs S(n) sont différentes de celles émises et la grandeur I est petite. Si par contre, il y a rupture, le signal S(n) devient une réplique du signal A(n), la corrélation devient alors forte.

Pour déterminer cette valeur sans trop nécessiter de calculs, la demanderesse fait appel à des facteurs d'intercorrélation du type :

$$\epsilon_\tau \; = \; E[A(n).\overline{S}(n+\tau)] \qquad (2)$$

et a constaté que la quantité (1) pouvait être évaluée en utilisant la formule suivante :

$$I \; = \; \sum_{i=0}^{\infty} \left| \mathscr{E}^r_i \right|^2 \qquad\qquad (3)$$

Dans la relation (3), N1 et N2 = N1 + K - 1 représentent 6 et 8 ms respectivement. Le calcul de la corrélation est pertinent puisqu'il s'étend sur les 2 ms les plus significatives du chemin d'écho.

Les valeurs

$$\mathscr{E}^r_i(n)$$

dans lesquelles "r" représente le suréchantillonnage, sont calculées à chaque échantillon au moyen de la formule :

$$\mathscr{E}^r_i(n) \; = \; (1-\lambda) \; \mathscr{E}^r_i(n-1) \; + \; \lambda A(n).\overline{S}^r_{n+i}$$

où $\lambda < 1$ est une constante.

Puis un calcul de module et une seule sommation sont effectués pour obtenir une estimation de I :

$$\hat{I} \dashv \hat{I} \; + \; |\mathscr{E}_i|^2$$

Cette grandeur I est comparée avec une valeur de seuil L. Cette valeur est indépendante du chemin d'écho c'est-à-dire des composante H(i) de sa réponse impulsionnelle. Ceci est dû au fait que la commande automatique de gain oeuvre pour que le niveau des données reçues soit constant :

$$E[|S(n)|^2] = L_{cag}$$

On peut écrire que :

$$S'(n) = \sum_{i=0}^{\infty} A(i)H'(n-i)$$

$$E[|S'(n)|^2] = \frac{\sigma^2}{R} \cdot \sum_{i=0}^{\infty} \sum_{r=0}^{R-1} |H'(i)|^2$$

où :

$$\sigma^2 = E[|A(n)|^2]$$

donc :

$$\sum_{i=0}^{\infty} \sum_{r=0}^{R-1} |H'(i)|^2 = L_{cag}R/\sigma^2$$

Or, on a :

$$I = \sigma^4 \sum_{i=0}^{\infty} \sum_{r=0}^{R-1} |H'(i)|^2$$

En cas de rupture, on a finalement :

$$I = \sigma^2 L_{CAG}R$$

Il suffit de poser :

$$L = \frac{\sigma^2 L_{CAG}R}{2}$$

Le processus de calcul peut être simplifié.

On rappelle que la réponse impulsionnelle du chemin d'écho s'étend sur 15 ms. Le gros de l'énergie se trouve dans l'intervalle [6 ms-8 ms]. Cela veut dire que pour une fréquence des symboles de 2400 Hz, les coefficients H'(M) ont un module important pour :

$$M \in [N1;N2] \quad N1 = 14 \quad N2 = 19$$

La simplification apportée par l'invention consiste donc, à calculer un seul terme

$$\mathscr{E}_i^r$$

à chaque échantillon (ou R termes par symbole). Le calcul de la quantité I s'étend ainsi sur :

$$K = (N2 - N1 + 1) \text{ symboles}$$

Le processus de calcul de I, implanté dans la mémoire 14 sous forme d'instructions, sera le suivant :

Symbole m = Kn :

$$I \leftarrow 0$$

$$\mathcal{E}^0_{NI}(m) = (1-\lambda)\mathcal{E}^0_{NI}[m-K] + \lambda A_{(m)}\overline{S}^0_{(m+NI)}$$

$$\mathcal{E}^1_{NI}(m) = (1-\lambda)\mathcal{E}^1_{NI}[m-K] + \lambda A_{(m)}\overline{S}^1_{(m+NI)}$$

$$\ldots$$

$$\mathcal{E}^{R-1}_{NI}(m) = (1-\lambda)\mathcal{E}^{R-1}_{NI}[m-K] + \lambda A_{(m)}\overline{S}^{R-1}_{(m+NI)}$$

$$I \leftarrow I + \left|\mathcal{E}^0_{NI}(m)\right|^2 + \ldots + \left|\mathcal{E}^{R-1}_{NI}(m)\right|^2$$

Symbole m = Kn+1 :

$$\mathcal{E}^0_{NI+1}(m) = (1-\lambda)\mathcal{E}^0_{NI+1}[m-K] + \lambda A_{(m)}\overline{S}^0_{(m+NI+1)}$$

$$\ldots$$

$$\mathcal{E}^{R-1}_{NI+1}(m) = (1-\lambda)\mathcal{E}^{R-1}_{NI+1}[m-K] + \lambda A_{(m)}\overline{S}^{R-1}_{(m+NI+1)}$$

$$I \leftarrow I + \left|\mathcal{E}^0_{NI+1}(m)\right|^2 + \ldots + \left|\mathcal{E}^{R-1}_{NI+1}(m)\right|^2$$

$$\ldots\ldots$$

Symbole m = Kn + K-1 :

$$\mathcal{E}^0_{NI+K-1}(m) = \ldots$$

$$\ldots$$

$$I \leftarrow I + \left|\mathcal{E}^0_{NI+K-1}(m)\right|^2 + \ldots + \left|\mathcal{E}^{R-1}_{NI+K-1}(m)\right|^2$$

Aux instants Kn + K-1, I est comparé à un seuil L. Si I > L, une alarme est déclenchée signalant une rupture de ligne.

En variante, si on ne dispose que de la partie réelle du signal reçu S, on peut utiliser le facteur de corrélation

$$\mathcal{E}R^r_i$$

basé sur la relation :

$$E[A(n)Re[S^r(n+M)]] = E\left[A(n)Re\left[\sum_j A(j)H^r(n+M+j)\right]\right] = (\sigma^2/2).H^r(M)$$

où Re(...) est la partie réelle de la quantité entre parenthèses.
En pratique, on peut le calculer comme suit :

$$\mathcal{E}R^r_i(n) = (1-\lambda)\,\mathcal{E}R^r_i(n-1) + \lambda A(n)\,Re[S^r(n+i)]$$

Si la coupure de ligne survient du côté du modem lointain, la désadaptation concerne uniquement l'écho lointain. Pour surveiller ce phénomène, il suffit de choisir judicieusement les bornes N1 et N2 en fonction du retard brut de l'écho lointain. On effectue les opérations de corrélation pour les deux types d'écho de manière parallèle ou alternée.

Dans ce qui précède on a supposé que les horloges émission et réception sont synchrones. Le glissement éventuel de ces deux horloges l'une par rapport à l'autre n'a pas d'influence sur les performances de l'algorithme.

**Revendications**

1.  Système de transmission comprenant un modem connecté à un modem distant par une ligne de transmission, au moins un des modems comportant un dispositif de détection de rupture de ligne, avec un mesureur d'une grandeur représentant la corrélation des données émises avec des données reçues et un dispositif à seuil pour déclencher une alarme de rupture de ligne lorsque cette grandeur excède une valeur de seuil L, caractérisé en ce que la corrélation porte sur une gamme limitée d'échantillons correspondant au temps d'écho.

2.  Système selon la revendication 1 pour lequel il est prévu une commande automatique de gain pour garder un niveau constant des données reçues $L_{CAG}$, caractérisé en ce que le niveau L est donné par une fraction de la valeur : $\sigma^2.L_{CAG}$.

3.  Système selon la revendication 1 destiné à un modem comportant au moins un annuleur d'écho, caractérisé en ce que la corrélation porte sur des gammes limitées d'échantillons correspondant aux temps d'écho pour lesquels l'annuleur d'échos est prévu.

4.  Modem comprenant un dispositif de détection de rupture de ligne de transmission comportant un mesureur d'une grandeur représentant la corrélation des données émises avec des données reçues et un dispositif à seuil pour déclencher une alarme de rupture de ligne lorsque cette grandeur excède une valeur de seuil L, caractérisé en ce que la corrélation porte sur une gamme limitée d'échantillons correspondant au temps d'écho.

5.  Modem selon la revendication 4 pour lequel il est prévu une commande automatique de gain pour garder un niveau constant des données reçues $L_{CAG}$, caractérisé en ce que le niveau L est donné par une fraction de la valeur $\sigma^2.L_{CAG}$.

6.  Modem selon la revendication 4 destiné à un modem comportant au moins un annuleur d'écho, caractérisé en ce que la corrélation porte sur des gammes limitées d'échantillons correspondant aux temps d'écho pour lesquels l'annuleur d'écho est prévu.

FIG.1

FIG.2

Office européen
des brevets

**RAPPORT DE RECHERCHE EUROPEENNE**

Numero de la demande

EP 94 20 2566

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN<br>vol. 16, no. 432 (E-1262) 9 Septembre 1992<br>& JP-A-41 050 525 (NEC CORPORATION)<br>* abrégé *<br>----- | 1-6 | H04L25/08 |

**DOMAINES TECHNIQUES RECHERCHES (Int.Cl.6)**

H04L
H04B
G01R

Le présent rapport a été établi pour toutes les revendications

| Lieu de la recherche | Date d'achèvement de la recherche | Examinateur |
|---|---|---|
| LA HAYE | 14 Décembre 1994 | Scriven, P |